# EUROPEAN PATENT APPLICATION

(11) **EP 2 573 669 A2**
(43) Date of publication of application: **27.03.2013**
(21) Application number: 12185537.3
(22) Date of filing: 21.09.2012
(51) Int. Cl.: G06F 3/0488, G06F 1/16

(54) **Apparatus and method for controlling screen rotation in a portable terminal**

(30) Priority: 23.09.2011 KR 20110096290
(71) Applicant: Samsung Electronics Co., Ltd, Gyeonggi-do 443-742 (KR)
(72) Inventor: Yoo, Ji-Wan, Gyeonggi-do (KR); Kim, Hyun-Hee, Gyeonggi-do (KR)
(74) Representative: Harrison Goddard Foote

(57) **Abstract**

A method of controlling screen rotation in a portable terminal having an automatic screen rotation service. If the automatic screen rotation service is activated the method comprises sensing a touch input through a touch screen of the portable terminal, and sensing rotation of the portable terminal. If rotation of the portable terminal is sensed while the touch input is maintained, the method further comprises locking or deactivating the automatic screen rotation service. A portable terminal comprising a controller, a touch screen and a sensing module is arranged to implement the method.

## Description

### TECHNICAL FIELD OF THE INVENTION

The present disclosure relates to an apparatus and method for controlling screen rotation in a portable terminal. More particularly, the present disclosure relates to an apparatus and method for controlling screen rotation in a portable terminal having an automatic screen rotation service. The portable terminal may comprise a touch screen, a rotation sensor and a controller.

### BACKGROUND OF THE INVENTION

Portable terminals are becoming a necessity of modem people due to their portability and their evolution into multimedia devices that provide various services such as a voice and video call functions, an information input/output function, and data storage.

As the use of multimedia services using portable terminals increases, the amount of information to be processed and the amount of information to be displayed by portable terminals are increasing. Accordingly, there is increasing interest in portable terminals having a touch screen capable of improving spatial utilization and having an increased display size.

A touch screen is an input/output device performing information input and display through one screen. When a portable terminal uses a touch screen, a separate input device such as a keypad can be removed so as to increase the display area. For example, when a portable terminal has a full touch scheme in which a touch screen is applied to the whole screen, the whole of a surface of the portable terminal can be used as a screen, increasing the screen size.

When using a touch screen as above, a portable terminal does not have a separate input device such as a keypad, so its manipulation scheme is different from that of a portable terminal with a separate input device. Accordingly, a portable terminal with a touch screen may require a separate user interface using the touch screen.

It is known for portable terminals to incorporate movement sensors so that rotation of the portable terminal can be detected. Detected rotation can be used to rotate the display of information on a display screen. Such automatic screen rotation is not always desirable according to user preferences and the application currently being executed by the portable terminal.

### SUMMARY OF THE INVENTION

It is an aim of embodiments of the present invention to address at least one of the above-discussed deficiencies of the prior art. In particular, it is an aim of embodiments of the present invention to provide an apparatus and method for controlling screen rotation in a portable terminal. In particular, certain embodiments of the present invention aim to provide a mechanism for locking automatic screen rotation. In particular, certain embodiments of the present invention aim to provide an apparatus and method for locking automatic screen rotation in a portable terminal with a touch screen.

According to certain embodiments, automatic screen rotation is locked only in a specific application in a portable terminal with a touch screen.

Embodiments of the present invention aim to simplify automatic screen rotation locking setting in a portable terminal with a touch screen.

According to a first aspect of the present invention there is provided A method of controlling screen rotation in a portable terminal having an automatic screen rotation service, the method comprising: if the automatic screen rotation service is activated: sensing a touch input through a touch screen of the portable terminal; and sensing rotation of the portable terminal; wherein if rotation of the portable terminal is sensed while the touch input is maintained, the method further comprises locking or deactivating the automatic screen rotation service.

In an embodiment, locking or deactivating the automatic screen rotation includes, when the rotation of the portable terminal is sensed while the touch is held, confirming a touch and hold time and, when the touch is held during a reference time, locking or deactivating the automatic screen rotation.

In an embodiment, locking or deactivating the automatic screen rotation includes, when the rotation of the portable terminal is sensed while the touch is held, confirming the rotation direction of the portable terminal and, when the rotation direction of the portable terminal is a first reference direction, locking or deactivating the automatic screen rotation.

According to a second aspect of the present invention there is provided a portable terminal comprising: a controller arranged to implement an automatic screen rotation service; a touch screen arranged to sense a touch input and to provide a touch input signal to the controller; and a sensing module arranged to sense rotation of the portable terminal and to provide a rotation signal to the controller; wherein if the automatic screen rotation service is activated the controller is arranged to determine if a touch input signal is received, to determine if a rotation signal is received while the touch input signal is maintained, and if so to lock or deactivate the automatic screen rotation service.

In an embodiment, when the rotation of the portable terminal is sensed while the touch is held, the controller confirms a touch and hold time and, when the touch is held during a reference time, the controller locks or deactivates the automatic screen rotation.

In an embodiment, when the rotation of the portable terminal is sensed while the touch is held, the controller confirms the rotation direction of the portable terminal and, when the rotation direction of the portable terminal is a first reference direction, the controller locks or deactivates the automatic screen rotation.

According to a third aspect of the present invention there is provided a method of controlling screen rotation in a portable terminal having an automatic screen rotation service, the method comprising: if the automatic screen rotation service is deactivated: sensing a touch input through a touch screen of the portable terminal; and sensing rotation of the portable terminal; wherein if rotation of the portable terminal is sensed while the touch input is maintained, the method further comprises unlocking the deactivated automatic screen rotation service or activating the automatic screen rotation service.

According to a fourth aspect of the present invention there is provided a portable terminal comprising: a controller arranged to implement an automatic screen rotation service; a touch screen arranged to sense a touch input and to provide a touch input signal to the controller; and a sensing module arranged to sense rotation of the portable terminal and to provide a rotation signal to the controller; wherein if the automatic screen rotation service is deactivated the controller is arranged to determine if a touch input signal is received, to determine if a rotation signal is received while the touch input signal is maintained, and if so to unlock the deactivated automatic screen rotation service or activate the automatic screen rotation service.

Another aspect of the invention provides a computer program comprising instructions arranged, when executed, to implement a method and/or apparatus in accordance with any one of the above-described aspects. A further aspect provides machine-readable storage storing such a program.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a block diagram illustrating a construction of a portable terminal according to the present disclosure;

FIG. 2 is a flowchart illustrating a procedure for locking screen rotation in a portable terminal according to a first embodiment of the present disclosure;

FIG. 3 is a flowchart illustrating a procedure for locking screen rotation in a portable terminal according to a second embodiment of the present disclosure;

FIG. 4 is a flowchart illustrating a procedure for locking screen rotation in a portable terminal according to a third embodiment of the present disclosure;

FIG. 5 is a flowchart illustrating a procedure for locking screen rotation in a portable terminal according to a fourth embodiment of the present disclosure;

FIG. 6 is a flowchart illustrating a procedure for releasing locked screen rotation in a portable terminal according to a first embodiment of the present disclosure;

FIG. 7 is a flowchart illustrating a procedure for releasing locked screen rotation in a portable terminal according to a second embodiment of the present disclosure;

FIG. 8 is a flowchart illustrating a procedure for releasing locked screen rotation in a portable terminal according to a third embodiment of the present disclosure;

FIG. 9 is a flowchart illustrating a procedure for releasing locked automatic screen rotation in a portable terminal according to a fourth embodiment of the present disclosure;

FIG. 10 is a flowchart illustrating a procedure for releasing locked screen rotation in a portable terminal according to a fifth embodiment of the present disclosure;

FIG. 11 is a flowchart illustrating a procedure for locking the screen rotation of a specific application in a portable terminal according to a first embodiment of the present disclosure;

FIG. 12 is a flowchart illustrating a procedure for locking the screen rotation of a specific application in a portable terminal according to a second embodiment of the present disclosure; and

FIG. 13 is a diagram illustrating a screen configuration for screen rotation locking in a portable terminal according to an embodiment of the present disclosure.

### DETAILED DESCRIPTION OF THE INVENTION

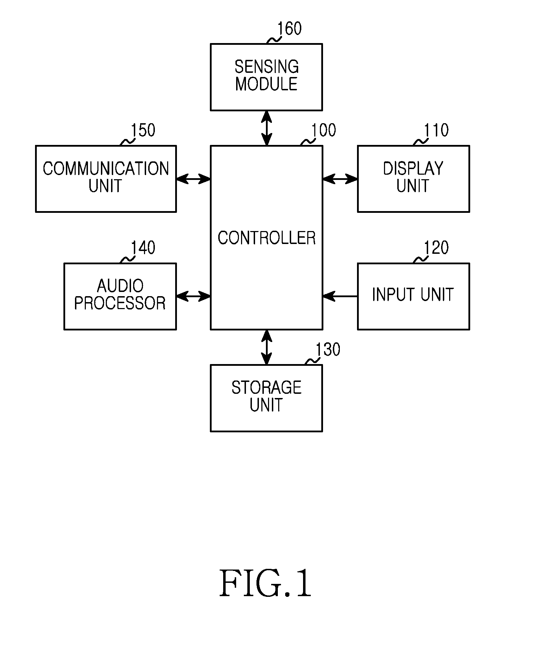

FIGURES 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged terminal. Preferred embodiments of the present disclosure will be described herein below with reference to the accompanying drawings. In the following description, well-known functions or constructions are not described in detail since they would obscure the disclosure in unnecessary detail. Terms described below, which are defined considering functions in the present disclosure, can be different depending on user and operator's intention or practice. Therefore, the terms should be defined on the basis of the disclosure throughout this specification.

Below, the present disclosure describes a technology for controlling automatic screen rotation in a portable terminal. Here, the automatic screen rotation represents a service of automatically rotating information displayed on a display unit considering a slope of the portable terminal. The present invention provides an apparatus and method for activating, locking or deactivating automatic screen rotation. Also, the present invention provides an apparatus and method for unlocking a deactivated automatic screen rotation. Locking automatic screen rotation may also be referred to as temporary stopping of the automatic screen rotation or screen orientation. Deactivating automatic screen rotation may also be referred to as removing automatic screen rotation service set-up in order to release the set-up of automatic screen rotation service and therefore not to perform automatic rotation service. Locking screen orientation may also be referred to as a situation in which the information displayed on a screen rotates with the portable terminal as the portable terminal is rotated. Embodiments of the present invention are particularly concerned with a portable terminal having, but not limited, a rectangular touch screen such that in a first rotational position the screen is in a portrait orientation and in a second rotational position the screen is in a landscape orientation.

In the following description, the term portable terminal includes a mobile communication terminal with a touch screen, a Personal Digital Assistant (PDA), a laptop computer, a smartphone, a netbook, a Mobile Internet Device (MID), a Ultra Mobile Personal Computer (UMPC), a tablet PC, a navigation, an MPEG Audio Layer - 3 (MP3) player, and the like.

FIG. 1 illustrates a construction of a portable terminal according to the present disclosure.

As illustrated in FIG. 1, the portable terminal includes a controller 100, a display unit 110, an input unit 120, a storage unit 130, an audio processor 140, a communication unit 150, and a sensing module 160.

The controller 100 controls the overall operation of the portable terminal. For example, the controller 100 performs voice call and data communication.

The controller 100 controls an automatic screen rotation service in accordance with a screen locking event (a screen orientation locking event). For example, while an automatic rotation service is set, when the rotation of the portable terminal is sensed while a touch on the display unit 110 is held, the controller 100 recognizes that a screen locking event occurs. Accordingly, the controller 100 locks automatic screen rotation so that, although a change of a slope of the portable terminal is sensed, information displayed on the display unit 110 is not rotated.

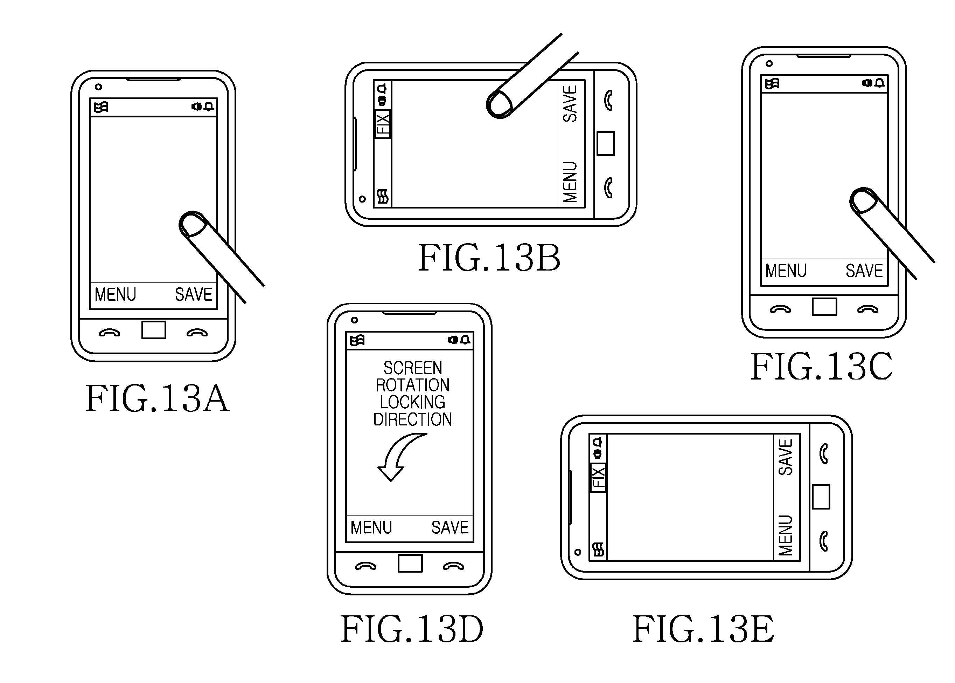

For another example, when the rotation of the portable terminal is sensed while a touch on the display unit 110 is held during a reference time, the controller 100 recognizes that the screen locking event occurs. Accordingly, the controller 100 locks automatic screen rotation so that, although a change of a slope of the portable terminal is sensed, information displayed on the display unit 110 is not rotated. In an embodiment, when the touch on the display unit 110 is held during the reference time, the controller 100 can control to display the rotation direction of the terminal for the screen locking event as illustrated in FIG. 13D.

For further example, when the rotation of the portable terminal is sensed in a first reference direction while a touch on the display unit 110 is held, the controller 100 recognizes that the screen locking event occurs. Accordingly, the controller 100 locks automatic screen rotation so that, although a change of a slope of the portable terminal is sensed, information displayed on the display unit 110 is not rotated. Here, the first reference direction represents a rotation direction of the portable terminal preset for the occurrence of the screen locking event.

For yet another example, when the rotation of the portable terminal is sensed in a first reference direction while a touch on the display unit 110 is held during a reference time, the controller 100 recognizes that the screen locking event occurs. Accordingly, the controller 100 locks automatic screen rotation so that, although a change of a slope of the portable terminal is sensed, information displayed on the display unit 110 is not rotated. In an embodiment, when the touch on the display unit 110 is held during the reference time, the controller 100 can control to display the rotation direction of the terminal for the screen locking event as illustrated in FIG. 13D.

When a screen unlocking event occurs while automatic screen rotation is locked, the controller 100 releases the locked automatic screen rotation (that is, automatic screen rotation is enabled or activated). For example, when the rotation of the portable terminal is sensed while a touch on the display unit 110 is held with the automatic screen rotation is locked, the controller 100 recognizes that the screen unlocking event occurs. Accordingly, the controller 100 rotates information displayed on the display unit 110 according to a change of a slope of the portable terminal.

For another example, when the rotation of the portable terminal is sensed while a touch on the display unit 110 is held during a reference time with the automatic screen rotation is locked, the controller 100 recognizes that the screen unlocking event occurs. Accordingly, the controller 100 rotates information displayed on the display unit 110 according to a change of a slope of the portable terminal. In an embodiment, when the touch on the display unit 110 is held during the reference time, the controller 100 can control to display the rotation direction of the terminal for the screen unlocking event as illustrated in FIG. 13D.

For further example, when the rotation of the portable terminal is sensed in a second reference direction while a touch on the display unit 110 is held with the automatic screen rotation is locked" the controller 100 recognizes that the screen unlocking event occurs. Accordingly, the controller 100 rotates information displayed on the display unit 110 according to a change of a slope of the portable terminal. Here, the second reference direction represents a rotation direction of the portable terminal preset for the occurrence of the screen unlocking event. In an embodiment, the second reference direction can be the same as or different from the first reference direction.

For yet another example, when the rotation of the portable terminal is sensed in a second reference direction while a touch on the display unit 110 is held during a reference time with the automatic screen rotation is locked, the controller 100 recognizes that the screen unlocking event occurs. Accordingly, the controller 100 rotates information displayed on the display unit 110 according to a change of a slope of the portable terminal. In an embodiment, when the touch on the display unit 110 is held during the reference time, the controller 100 can control to display the rotation direction of the terminal for the screen unlocking event as illustrated in FIG. 13D.

For still another example, while an automatic rotation service is locked, when a screen rotation locking icon is selected, the controller 100 recognizes that the screen unlocking event occurs. Accordingly, the controller 100 rotates information displayed on the display unit 110 according to a change of a slope of the portable terminal.

For still another example, the controller 100 may lock the automatic screen rotation only in an application supporting screen rotation. In this situation, when the execution of the application is ended, the controller 100 activates the automatic screen rotation service. Here, the application supporting the screen rotation includes a Web browser, a photo album, a video player and the like.

The display unit 110 is composed of a touch screen performing a function of information display and a function of an input means together. For example, the display unit 110 displays state information of the portable terminal, a character input by a user, a moving picture, a still picture and the like. Also, the display unit 110 provides touch information by a touch pen or a user's finger, to the controller 100.

The input unit 120 provides input data generated by user selection to the controller 100. For example, the input unit 120 may include a control button for control of the portable terminal. For another example, the input unit 120 can be composed of a keypad for receiving input data from a user.

The storage unit 130 can be composed of a program storage unit for storing a program for controlling an operation of the portable terminal and a data storage unit for storing data generated during the execution of a program. For example, the program storage unit of the storage unit 130 can store a program for controlling the automatic screen rotation service in the controller 100. In this situation, the controller 100 can execute a program stored in the program storage unit and control the automatic screen rotation service.

The audio processor 140 controls input/output of an audio signal. For example, the audio processor 140 transmits an audio signal provided from the controller 100 to the external environment through a speaker, and provides an audio signal provided from a microphone to the controller 100.

The communication unit 150 processes a signal transmitted/received through an antenna for voice and data communication.

The sensing module 160 senses a motion state of the portable terminal. For example, the sensing module 220 includes at least one of an acceleration sensor, a geomagnetic sensor, a gyroscope, and an altitude sensor, and senses the rotation of the terminal.

In the aforementioned embodiment, when the screen locking event occurs while the automatic screen rotation service activated, the portable terminal locks automatic screen rotation so that, although a change of a slope of the portable terminal is sensed, information displayed on the display unit 110 is not rotated. Here, Locking automatic screen rotation may be referred to as temporary holding screen rotation or locking screen orientation. Locking screen orientation refers to a situation in which the information displayed on a screen rotates with the portable terminal as the portable terminal is rotated.

In another embodiment, when the screen locking event occurs while the automatic screen rotation service is activated, the portable terminal deactivates the automatic screen rotation service. Here, Deactivating the automatic screen rotation service may be referred to as removing automatic screen rotation service set-up in order to release the set-up of automatic screen rotation service and therefore not to perform automatic rotation service.

In the aforementioned embodiment, when the screen unlocking event occurs while the automatic screen rotation is locked, the portable terminal releases locked automatic screen rotation.

In another embodiment, when the screen unlocking event occurs while the automatic screen rotation service is deactivated, the portable terminal activates the automatic screen rotation service. Here, Activating the automatic screen rotation service may be referred to as set-up automatic screen rotation service.

In another embodiment, when the screen unlocking event occurs while the automatic screen rotation service is deactivated, the portable terminal unlocks the deactivated automatic screen rotation service. Here, Unlocking the deactivated automatic screen rotation service may be referred to as temporary rotates information displayed on the display unit 110 according to a change of a slope of the portable terminal.

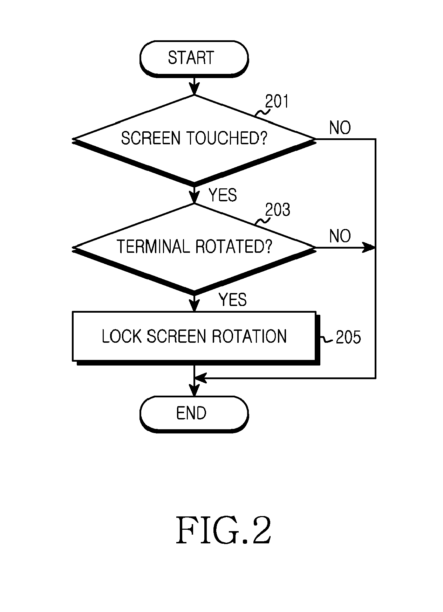

FIG. 2 illustrates a procedure for controlling screen rotation in a portable terminal according to a first embodiment of the present disclosure.

Referring to FIG. 2, in step 201, the portable terminal determines if a touch on the display unit 110 is sensed. For example, the portable terminal determines if a touch on the display unit 110 by a user is sensed as illustrated in FIG. 13A.

When it is determined in step 201 that the touch on the display unit 110 is not sensed, the portable terminal recognizes that a screen locking event does not occur. Accordingly, the portable terminal terminates the algorithm according to the present disclosure.

Alternatively, when it is determined in step 201 that the touch on the display unit 110 is sensed, the portable terminal proceeds to step 203 and determines if the terminal is rotated while the touch on the display unit 110 is held. For example, the portable terminal determines if the terminal is rotated while the touch on the display unit 110 by the user is held as illustrated in FIG. 13B.

When it is determined in step 203 that the terminal is not rotated, or the touch on the display unit 110 is released before the terminal is rotated, the portable terminal recognizes that the screen locking event does not occur. Accordingly, the portable terminal terminates the algorithm according to the present disclosure.

Alternatively, when it is determined in step 203 that the terminal is rotated while the touch on the display unit 110 is held, the portable terminal recognizes that the screen locking event occurs. Accordingly, the portable terminal proceeds to step 205 and locks automatic screen rotation. At this point, the portable terminal may deactivate an automatic screen rotation service.

After that, the portable terminal terminates the algorithm according to the present disclosure.

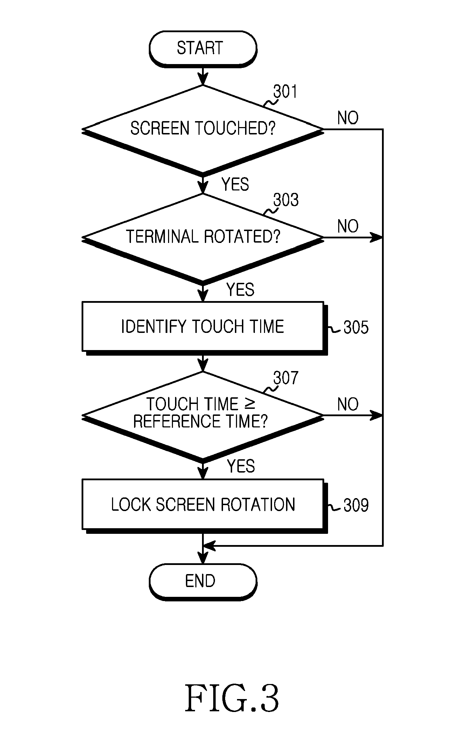

FIG. 3 illustrates a procedure for locking screen rotation in a portable terminal according to a second embodiment of the present disclosure.

Referring to FIG. 3, in step 301, the portable terminal determines if a touch on the display unit 110 is sensed. For example, the portable terminal determines if a touch on the display unit 110 by a user is sensed as illustrated in FIG. 13A.

When it is determined in step 301 that the touch on the display unit 110 is not sensed, the portable terminal recognizes that a screen locking event does not occur. Accordingly, the portable terminal terminates the algorithm according to the present disclosure.

Alternatively, when it is determined in step 301 that the touch on the display unit 110 is sensed, the portable terminal proceeds to step 303 and determines if the terminal is rotated while the touch on the display unit 110 is held. For example, the portable terminal determines if the terminal is rotated while the touch on the display unit 110 by the user is held as illustrated in FIG. 13B.

When it is determined in step 303 that the terminal is not rotated, or the touch on the display unit 110 is released before the terminal is rotated, the portable terminal recognizes that the screen locking event does not occur. Accordingly, the portable terminal terminates the algorithm according to the present disclosure.

Alternatively, when it is determined in step 303 that the terminal is rotated while the touch on the display unit 110 is held, the portable terminal proceeds to step 305 and identifies a touch and hold time for the display unit 110.

After that, the portable terminal proceeds to step 307 and compares the touch and hold time and a reference time.

When it is determined in step 307 that the touch and hold time is less than the reference time, the portable terminal recognizes that the screen locking event does not occur. Accordingly, the portable terminal terminates the algorithm according to the present disclosure.

Alternatively, when it is determined in step 307 that the touch and hold time is greater than or equal to the reference time, the portable terminal recognizes that the screen locking event occurs. Accordingly, the portable terminal proceeds to step 309 and locks automatic screen rotation. At this point, the portable terminal may deactivate an automatic screen rotation service.

After that, the portable terminal terminates the algorithm according to the present disclosure.

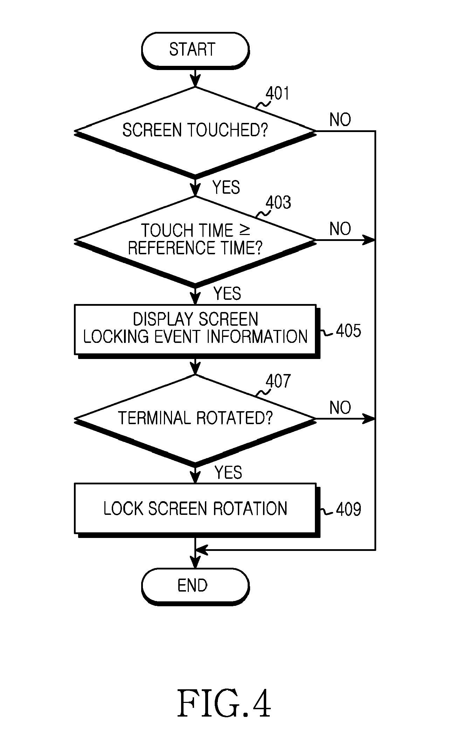

FIG. 4 illustrates a procedure for locking screen rotation in a portable terminal according to a third embodiment of the present disclosure.

Referring to FIG. 4, in step 401, the portable terminal determines if a touch on the display unit 110 is sensed. For example, the portable terminal determines if a touch on the display unit 110 by a user is sensed as illustrated in FIG. 13A.

When it is determined in step 401 that the touch on the display unit 110 is not sensed, the portable terminal recognizes that a screen locking event does not occur. Accordingly, the portable terminal terminates the algorithm according to the present disclosure.

Alternatively, when it is determined in step 401 that the touch on the display unit 110 is sensed, the portable terminal proceeds to step 403 and determines if the touch on the display unit 110 is held during a reference time. Accordingly, the portable terminal compares a touch and hold time for the display unit 110 and the reference time.

When it is determined in step 403 that the touch and hold time for the display unit 110 is less than the reference time, the portable terminal recognizes that the touch on the display unit 110 is not held during the reference time. Accordingly, the portable terminal terminates the algorithm according to the present disclosure.

When it is determined in step 403 that the touch and hold time for the display unit 110 is greater than or equal to the reference time, the portable terminal recognizes that the touch on the display unit 110 is held during the reference time. Accordingly, the portable terminal proceeds to step 405 and displays screen rotation event occurrence information. For example, when the touch on the display unit 110 is held during the reference time, the portable terminal displays terminal rotation direction for the screen locking event on the display unit 110 as illustrated in FIG. 13D.

After that, the portable terminal proceeds to step 407 and determines if the terminal is rotated. For example, the portable terminal determines if the terminal is rotated as illustrated in FIG. 13E. In an embodiment, the portable terminal determines the rotation or non-rotation of the terminal irrespective of user's touch and hold or not.

When it is determined in step 407 that the terminal is not rotated, the portable terminal recognizes that the screen locking event does not occur. Accordingly, the portable terminal terminates the algorithm according to the present disclosure.

Alternatively, when it is determined in step 407 that the terminal is rotated, the portable terminal recognizes that the screen locking event occurs. Accordingly, the portable terminal proceeds to step 409 and locks automatic screen rotation. At this point, the portable terminal may deactivate an automatic screen rotation service.

After that, the portable terminal terminates the algorithm according to the present disclosure.

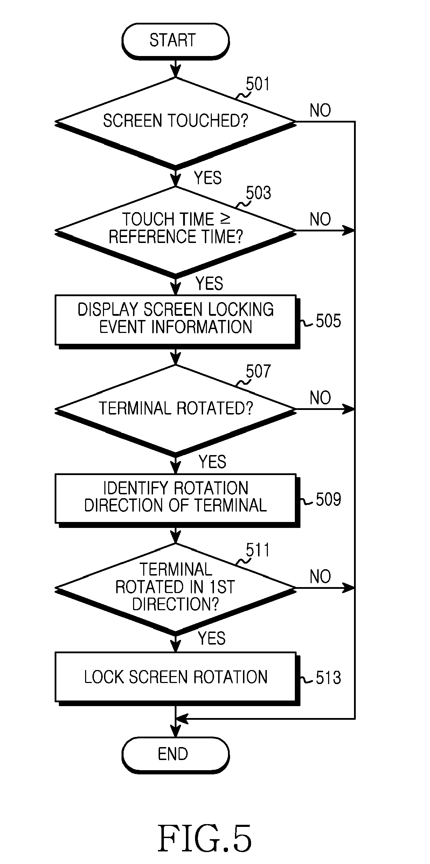

FIG. 5 illustrates a procedure for locking screen rotation in a portable terminal according to a fourth embodiment of the present disclosure.

Referring to FIG. 5, in step 501, the portable terminal determines if a touch on the display unit 110 is sensed. For example, the portable terminal determines if a touch on the display unit 110 by a user is sensed as illustrated in FIG. 13A.

When it is determined in step 501 that the touch on the display unit 110 is not sensed, the portable terminal recognizes that a screen locking event does not occur. Accordingly, the portable terminal terminates the algorithm according to the present disclosure.

Alternatively, when it is determined in step 501 that the touch on the display unit 110 is sensed, the portable terminal proceeds to step 503 and determines if the touch on the display unit 110 is held during a reference time. Accordingly, the portable terminal compares a touch and hold time for the display unit 110 and the reference time.

When it is determined in step 503 that the touch and hold time for the display unit 110 is less than the reference time, the portable terminal recognizes that the touch on the display unit 110 is not held during the reference time. Accordingly, the portable terminal terminates the algorithm according to the present disclosure.

Alternatively, when it is determined in step 503 that the touch and hold time for the display unit 110 is greater than or equal to the reference time, the portable terminal recognizes that the touch on the display unit 110 is held during the reference time. Accordingly, the portable terminal proceeds to step 505 and displays screen rotation event occurrence information. For example, when the touch on the display unit 110 is held during the reference time, the portable terminal displays terminal rotation direction for the screen locking event on the display unit 110 as illustrated in FIG. 13D.

After that, the portable terminal proceeds to step 507 and determines if the terminal is rotated. For example, the portable terminal determines if the terminal is rotated as illustrated in FIG. 13E. In an embodiment, the portable terminal may determine the rotation or non-rotation of the terminal irrespective of user's touch and hold or not.

When it is determined in step 507 that the terminal is not rotated, the portable terminal recognizes that the screen locking event does not occur. Accordingly, the portable terminal terminates the algorithm according to the present disclosure.

Alternatively, when it is determined in step 507 that the terminal is rotated, the portable terminal proceeds to step 509 and identifies the rotation direction of the terminal. For example, the portable terminal identifies the rotation direction of the terminal using a sensing module 160.

After identifying the rotation direction of the terminal, the portable terminal proceeds to step 511 and determines if the rotation direction of the terminal is consistent with a first reference direction. Here, the first reference direction represents the rotation direction of the portable terminal preset for the occurrence of the screen locking event.

When it is determined in step 511 that the rotation direction of the terminal is not consistent with the first reference direction, the portable terminal recognizes that the screen locking event does not occur. Accordingly, the portable terminal terminates the algorithm according to the present disclosure.

When it is determined in step 511 that the rotation direction of the terminal is consistent with the first reference direction, the portable terminal recognizes that the screen locking event occurs. Accordingly, the portable terminal proceeds to step 513 and locks automatic screen rotation. At this point, the portable terminal may deactivate an automatic screen rotation service.

After that, the portable terminal terminates the algorithm according to the present disclosure.

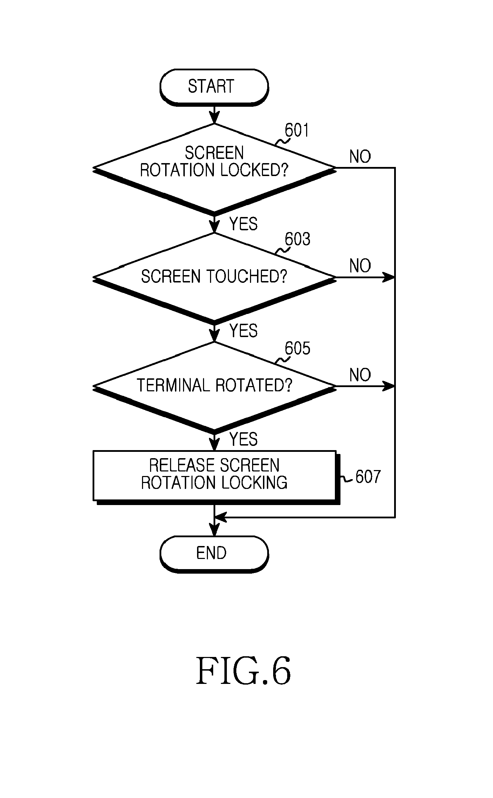

As described above, according to the algorithms of FIG. 2 to FIG. 5, when a screen locking event occurs automatic screen rotation is locked. When automatic screen rotation is locked, the portable terminal can release locked automatic screen rotation according to a screen unlocking event as illustrated in FIG. 6 to FIG. 10 below.

FIG. 6 illustrates a procedure for releasing locked automatic screen rotation in a portable terminal according to a first embodiment of the present disclosure.

Referring to FIG. 6, in step 601, the portable terminal determines if automatic screen rotation has been locked. That is, the portable terminal determines if an automatic screen rotation service has been deactivated.

When it is determined in step 601 that the automatic screen rotation has not been locked, the portable terminal terminates the algorithm according to the present disclosure.

Alternatively, when it is determined in step 601 that the automatic screen rotation has been locked, the portable terminal proceeds to step 603 and determines if a touch on the display unit 110 is sensed. For example, the portable terminal determines if the display unit 110 is touched by a user as illustrated in FIG. 13A.

When it is determined in step 603 that the touch on the display unit 110 is not sensed, the portable terminal recognizes that a screen unlocking event does not occur. Accordingly, the portable terminal terminates the algorithm according to the present disclosure.

Alternatively, when it is determined in step 603 that the touch on the display unit 110 is sensed, the portable terminal proceeds to step 605 and determines if the terminal is rotated while the touch on the display unit 110 is held. For example, the portable terminal determines if the terminal is rotated while the touch on the display unit 110 by the user is held as illustrated in FIG. 13B.

When the terminal is not rotated, or the touch on the display unit 110 is released before the terminal is rotated, the portable terminal recognizes that the screen unlocking event does not occur. Accordingly, the portable terminal terminates the algorithm according to the present disclosure.

Alternatively, when it is determined in step 605 that the terminal is rotated while the touch on the display unit 110 is held, the portable terminal recognizes that the screen unlocking event occurs. Accordingly, the portable terminal proceeds to step 607 and releases the locked automatic screen rotation. At this point, the portable terminal may activate the automatic screen rotation service.

After that, the portable terminal terminates the algorithm according to the present disclosure.

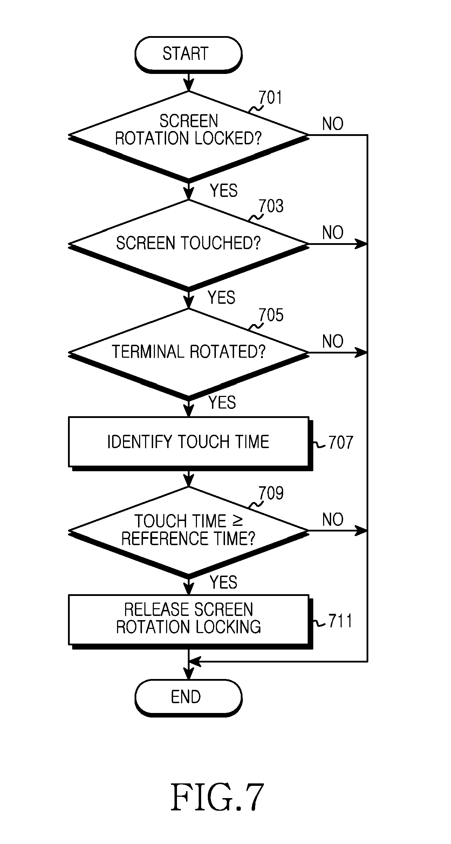

FIG. 7 illustrates a procedure for releasing locked automatic screen rotation in a portable terminal according to a second embodiment of the present disclosure.

Referring to FIG. 7, in step 701, the portable terminal determines if automatic screen rotation has been locked. That is, the portable terminal determines if an automatic screen rotation service has been deactivated.

When it is determined in step 701 that the automatic screen rotation has not been locked, the portable terminal terminates the algorithm according to the present disclosure.

Alternatively, when it is determined in step 701 that the automatic screen rotation has been locked, the portable terminal proceeds to step 703 and determines if a touch on the display unit 110 is sensed. For example, the portable terminal determines if the display unit 110 is touched by a user as illustrated in FIG. 13A.

When it is determined in step 703 that the touch on the display unit 110 is not sensed, the portable terminal recognizes that a screen unlocking event does not occur. Accordingly, the portable terminal terminates the algorithm according to the present disclosure.

Alternatively, when it is determined in step 703 that the touch on the display unit 110 is sensed, the portable terminal proceeds to step 705 and determines if the terminal is rotated while the touch on the display unit 110 is held. For example, the portable terminal determines if the terminal is rotated while the touch on the display unit 110 by the user is held as illustrated in FIG. 13B.

When it is determined in step 705 that the terminal is not rotated, or the touch on the display unit 110 is released before the terminal is rotated, the portable terminal recognizes that the screen unlocking event does not occur. Accordingly, the portable terminal terminates the algorithm according to the present disclosure.

Alternatively, when it is determined in step 705 that the terminal is rotated while the touch on the display unit 110 is held, the portable terminal proceeds to step 707 and identifies a touch and hold time for the display unit 110.

After that, the portable terminal proceeds to step 709 and compares the touch and hold time for the display unit 110 and a reference time.

When it is determined in step 709 that the touch and hold time is less than the reference time, the portable terminal recognizes that the screen unlocking event does not occur. Accordingly, the portable terminal terminates the algorithm according to the present disclosure.

Alternatively, when it is determined in step 709 that the touch and hold time is greater than or equal to the reference time, the portable terminal recognizes that the screen unlocking event occurs. Accordingly, the portable terminal proceeds to step 711 and releases the locked automatic screen rotation. At this point, the portable terminal may activate the automatic screen rotation service.

After that, the portable terminal terminates the algorithm according to the present disclosure.

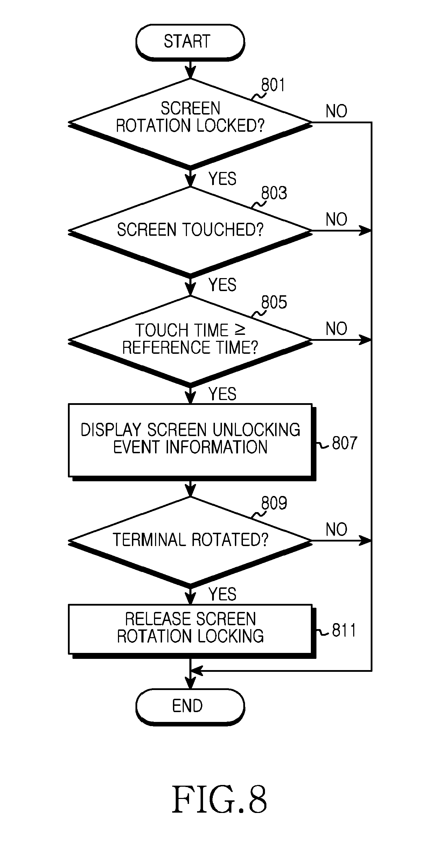

FIG. 8 illustrates a procedure for releasing locked automatic screen rotation in a portable terminal according to a third embodiment of the present disclosure.

Referring to FIG. 8, in step 801, the portable terminal determines if automatic screen rotation has been locked. That is, the portable terminal determines if an automatic screen rotation service has been deactivated.

When it is determined in step 801 that the automatic screen rotation has not been locked, the portable terminal terminates the algorithm according to the present disclosure.

Alternatively, when it is determined in step 801 that the automatic screen rotation has been locked, the portable terminal proceeds to step 803 and determines if a touch on the display unit 110 is sensed. For example, the portable terminal determines if the display unit 110 is touched by a user as illustrated in FIG. 13A.

When it is determined in step 803 that the touch on the display unit 110 is not sensed, the portable terminal recognizes that a screen unlocking event does not occur. Accordingly, the portable terminal terminates the algorithm according to the present disclosure.

Alternatively, when it is determined in step 803 that the touch on the display unit 110 is sensed, the portable terminal proceeds to step 805 and determines if the touch on the display unit 110 is held during a reference time. Accordingly, the portable terminal compares a touch and hold time for the display unit 110 and the reference time.

When it is determined in step 805 that the touch and hold time is less than the reference time, the portable terminal recognizes that the touch on the display unit 110 is not held during the reference time. Accordingly, the portable terminal terminates the algorithm according to the present disclosure.

Alternatively, when it is determined in step 805 that the touch and hold time is greater than or equal to the reference time, the portable terminal recognizes that the touch on the display unit 110 is held during the reference time. Accordingly, the portable terminal proceeds to step 807 and displays screen rotation unlocking event occurrence information. For example, when the touch on the display unit 110 is held during the reference time, the portable terminal displays terminal rotation direction for the screen unlocking event on the display unit 110 as illustrated in FIG. 13D.

After that, the portable terminal proceeds to step 809 and determines if the terminal is rotated. For example, the portable terminal determines if the terminal is rotated as illustrated in FIG. 13E. In an embodiment, the portable terminal determines the rotation or non-rotation of the terminal irrespective of user's touch and hold or not.

When it is determined in step 809 that the terminal is not rotated, the portable terminal recognizes that the screen unlocking event does not occur. Accordingly, the portable terminal terminates the algorithm according to the present disclosure.

Alternatively, when it is determined in step 809 that the terminal is rotated, the portable terminal recognizes that the screen unlocking event occurs. Accordingly, the portable terminal proceeds to step 811 and releases the locked automatic screen rotation. At this point, the portable terminal may activate the automatic screen rotation service.

After that, the portable terminal terminates the algorithm according to the present disclosure.

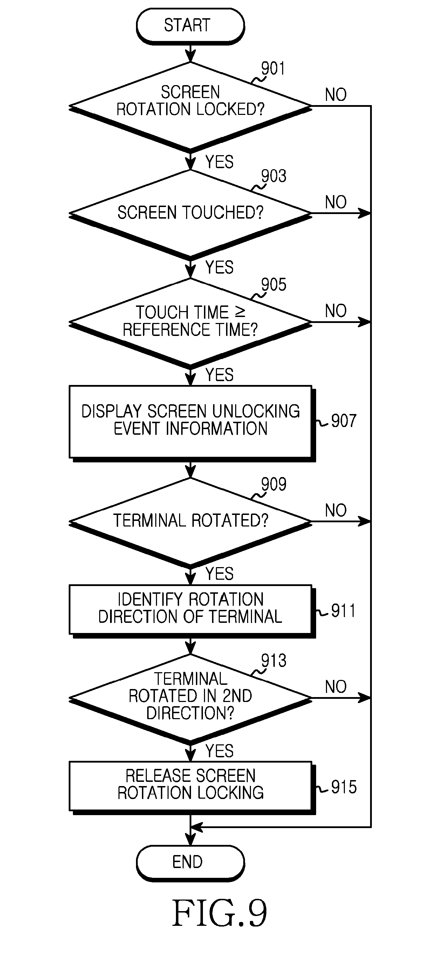

FIG. 9 illustrates a procedure for releasing locked automatic screen rotation in a portable terminal according to a fourth embodiment of the present disclosure.

Referring to FIG. 9, in step 901, the portable terminal determines if automatic screen rotation has been locked. That is, the portable terminal determines if an automatic screen rotation service has been deactivated.

When it is determined in step 901 that the automatic screen rotation has not been locked, the portable terminal terminates the algorithm according to the present disclosure.

Alternatively, when it is determined in step 901 that the automatic screen rotation has been locked, the portable terminal proceeds to step 903 and determines if a touch on the display unit 110 is sensed. For example, the portable terminal determines if the display unit 110 is touched by a user as illustrated in FIG. 13A.

When it is determined in step 903 that the touch on the display unit 110 is not sensed, the portable terminal recognizes that a screen unlocking event does not occur. Accordingly, the portable terminal terminates the algorithm according to the present disclosure.

Alternatively, when it is determined in step 903 that the touch on the display unit 110 is sensed, the portable terminal proceeds to step 905 and determines if the touch on the display unit 110 is held during a reference time. Accordingly, the portable terminal compares a touch and hold time for the display unit 110 and the reference time.

When it is determined in step 905 that the touch and hold time is less than the reference time, the portable terminal recognizes that the touch on the display unit 110 is not held during the reference time. Accordingly, the portable terminal terminates the algorithm according to the present disclosure.

Alternatively, when it is determined in step 905 that the touch and hold time is greater than or equal to the reference time, the portable terminal recognizes that the touch on the display unit 110 is held during the reference time. In this situation, the portable terminal proceeds to step 907 and displays screen rotation unlocking event occurrence information. For example, when the touch on the display unit 110 is held during the reference time, the portable terminal displays terminal rotation direction for the screen unlocking event on the display unit 110 as illustrated in FIG. 13D.

After that, the portable terminal proceeds to step 909 and determines if the terminal is rotated. For example, the portable terminal determines if the terminal is rotated as illustrated in FIG. 13E.

When it is determined in step 909 that the terminal is not rotated, the portable terminal recognizes that the screen unlocking event does not occur. Accordingly, the portable terminal terminates the algorithm according to the present disclosure.

Alternatively, when it is determined in step 909 that the terminal is rotated, the portable terminal proceeds to step 911 and identifies the rotation direction of the terminal. For example, the portable terminal identifies the rotation direction of the terminal using a sensing module 160.

After identifying the rotation direction of the terminal, the portable terminal proceeds to step 913 and determines if the rotation direction of the terminal is consistent with a second reference direction. Here, the second reference direction represents the rotation direction of the portable terminal preset for the occurrence of the screen unlocking event.

When it is determined in step 913 that the rotation direction of the terminal is not consistent with the second reference direction, the portable terminal recognizes that the screen unlocking event does not occur. Accordingly, the portable terminal terminates the algorithm according to the present disclosure.

When it is determined in step 913 that the rotation direction of the terminal is consistent with the second reference direction, the portable terminal recognizes that the screen unlocking event occurs. Accordingly, the portable terminal proceeds to step 915 and releases the locked automatic screen rotation. At this point, the portable terminal may activate the automatic screen rotation service.

After that, the portable terminal terminates the algorithm according to the present disclosure.

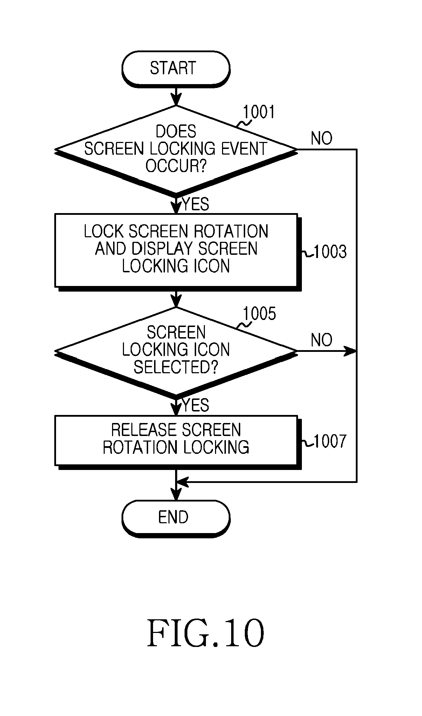

FIG. 10 illustrates a procedure for releasing locked automatic screen rotation in a portable terminal according to a fifth embodiment of the present disclosure.

Referring to FIG. 10, in step 1001, the portable terminal determines if a screen locking event occurs. For example, the portable terminal determines if a screen locking event occurs as illustrated in FIG. 2 to FIG. 5.

When it is determined in step 1001 that the screen locking event does not occur, the portable terminal terminates the algorithm according to the present disclosure.

Alternatively, when it is determined in step 1001 that the screen locking event occurs, the portable terminal proceeds to step 1003 and locks automatic screen rotation. That is, the portable terminal deactivates an automatic screen rotation service. In an embodiment, the portable terminal displays a screen rotation locking icon on the display unit 110.

After that, the portable terminal proceeds to step 1005 and determines if the screen rotation locking icon is selected. For example, the portable terminal determines if a touch on the screen rotation locking icon by a user is sensed.

When it is determined in step 1005 that the screen rotation locking icon is not selected, the portable terminal terminates the algorithm according to the present disclosure.

Alternatively, when it is determined in step 1005 that the screen rotation locking icon is selected, the portable terminal proceeds to step 1007 and releases the locked automatic screen rotation. At this point, the portable terminal may activate the automatic screen rotation service.

Next, the portable terminal terminates the algorithm according to the present disclosure.

In the aforementioned embodiment, when the screen unlocking event occurs while the automatic screen rotation is locked, the portable terminal releases locked automatic screen rotation.

In another embodiment, when the screen unlocking event occurs while the automatic screen rotation service is deactivated, the portable terminal activates the automatic screen rotation service. Here, Activating the automatic screen rotation service may be referred to as set-up automatic screen rotation service.

In another embodiment, when the screen unlocking event occurs while the automatic screen rotation service is deactivated, the portable terminal unlocks the deactivated automatic screen rotation service. Here, Unlocking the deactivated automatic screen rotation service may be referred to as temporary rotates information displayed on the display unit 110 according to a change of a slope of the portable terminal.

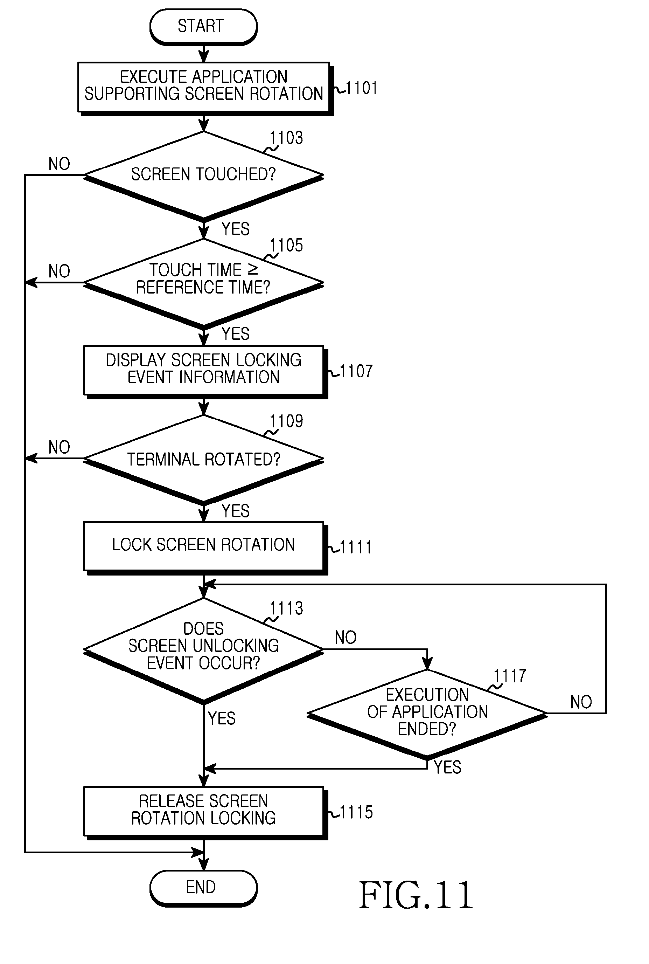

As described above, the portable terminal locks automatic screen rotation or releases locked automatic screen rotation considering touch information and terminal rotation information. In an embodiment, the portable terminal may lock automatic screen rotation or releases locked automatic screen rotation only in a specific application as illustrated in FIG. 11 to FIG. 12 below.

The following description is made on the assumption that, when a screen locking event occurs as illustrated in FIG. 4, the portable terminal locks automatic screen rotation when a specific application is running. However, when a screen locking event occurs as illustrated in FIG. 2 to FIG. 5 while the specific application has been run, the portable terminal can lock the automatic screen rotation.

FIG. 11 illustrates a procedure for locking the screen rotation of a specific application in a portable terminal according to a first embodiment of the present disclosure.

Referring to FIG. 11, in step 1101, the portable terminal executes an application supporting screen rotation. Here, the application supporting the screen rotation includes a Web browser, a photo album, a video player and the like.

After that, the portable terminal proceeds to step 1103 and determines if a touch on the display unit 110 is sensed. For example, the portable terminal determines if a touch on the display unit 110 by a user is sensed as illustrated in FIG. 13C.

When it is determined in step 1103 that the touch on the display unit 110 is not sensed, the portable terminal recognizes that a screen locking event does not occur. Accordingly, the portable terminal terminates the algorithm according to the present disclosure.

Alternatively, when it is determined in step 1103 that the touch on the display unit 110 is sensed, the portable terminal proceeds to step 1105 and determines if the touch on the display unit 110 is held during a reference time. Accordingly, the portable terminal compares a touch and hold time for the display unit 110 and the reference time.

When it is determined in step 1105 that the touch and hold time is less than the reference time, the portable terminal recognizes that the touch on the display unit 110 is not held during the reference time. Accordingly, the portable terminal terminates the algorithm according to the present disclosure.

When it is determined in step 1105 that the touch and hold time is greater than or equal to the reference time, the portable terminal recognizes that the touch on the display unit 110 is held during the reference time. Accordingly, the portable terminal proceeds to step 1107 and displays screen rotation locking event occurrence information. For example, when the touch on the display unit 110 is held during the reference time, the portable terminal displays terminal rotation direction for the screen locking event on the display unit 110 as illustrated in FIG. 13D.

After that, the portable terminal proceeds to step 1109 and determines if the terminal is rotated. For example, the portable terminal determines if the terminal is rotated as illustrated in FIG. 13E. In an embodiment, the portable terminal determines the rotation or non-rotation of the terminal irrespective of whether a user touches and holds the screen or not.

When it is determined in step 1109 that the terminal is not rotated, the portable terminal recognizes that the screen locking event does not occur. Accordingly, the portable terminal terminates the algorithm according to the present disclosure.

Alternatively, when it is determined in step 1109 that the terminal is rotated, the portable terminal recognizes that the screen locking event occurs. Accordingly, the portable terminal proceeds to step 1111 and locks automatic screen rotation. At this point, the portable terminal may deactivate an automatic screen rotation service.

After that, the portable terminal proceeds to step 1113 and determines if a screen unlocking event occurs. For example, the portable terminal determines if a screen unlocking event occurs as illustrated in FIG. 6 to FIG. 10.

When it is determined in step 1113 that the screen unlocking event occurs, the portable terminal proceeds to step 1115 and releases the locked automatic screen rotation. If the automatic screen rotation service deactivated according to the screen locking event, the portable terminal may activate the automatic screen rotation service.

Alternatively, when it is determined in step 1113 that the screen unlocking event does not occur, the portable terminal proceeds to step 1117 and determines if the execution of the application executed in step 1101 is ended.

When it is determined in step 1117 that the execution of the application is not ended, the portable terminal returns to step 1113 and determines if the screen unlocking event occurs.

Alternatively, when it is determined in step 1117 that the execution of the application is ended, the portable terminal proceeds to step 1115 and releases the locked automatic screen rotation. If the automatic screen rotation service deactivated according to the screen locking event, the portable terminal may activate the automatic screen rotation service.

Next, the portable terminal terminates the algorithm according to the present disclosure.

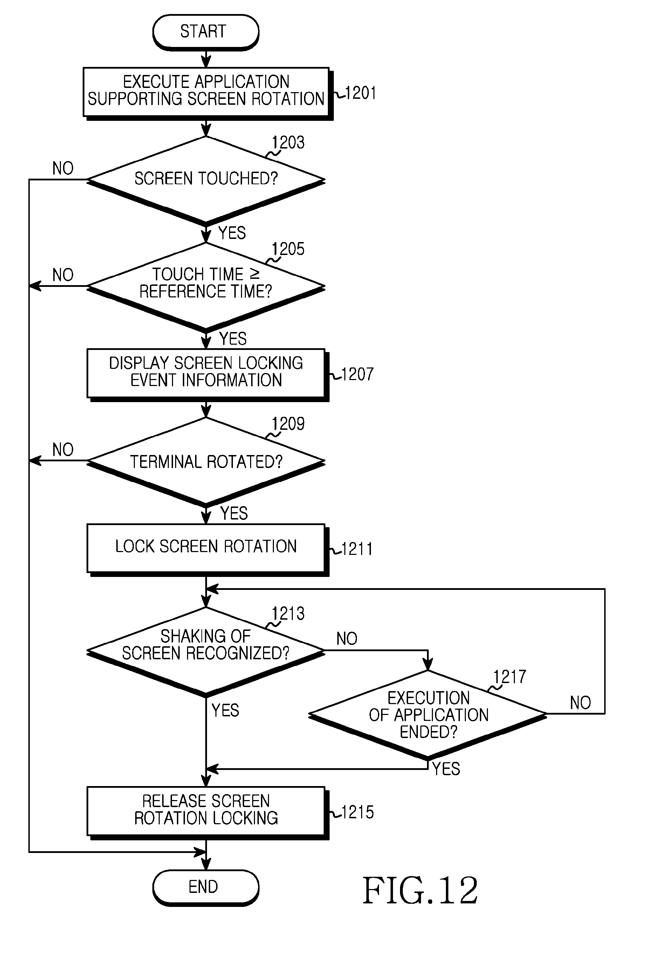

FIG. 12 illustrates a procedure for locking the screen rotation of a specific application in a portable terminal according to a second embodiment of the present disclosure.

Referring to FIG. 12, in step 1201, the portable terminal executes an application supporting screen rotation. Here, the application supporting the screen rotation includes a Web browser, a photo album, a video player and the like.

After that, the portable terminal proceeds to step 1203 and determines if a touch on the display unit 110 is sensed. For example, the portable terminal determines if a touch on the display unit 110 by a user is sensed as illustrated in FIG. 13C.

When it is determined in step 1203 that the touch on the display unit 110 is not sensed, the portable terminal recognizes that a screen locking event does not occur. Accordingly, the portable terminal terminates the algorithm according to the present disclosure.

Alternatively, when it is determined in step 1203 that the touch on the display unit 110 is sensed, the portable terminal proceeds to step 1205 and determines if the touch on the display unit 110 is held during a reference time. Accordingly, the portable terminal compares a touch and hold time for the display unit 110 and the reference time.

When it is determined in step 1205 that the touch and hold time is less than the reference time, the portable terminal recognizes that the touch on the display unit 110 is not held during the reference time. Accordingly, the portable terminal terminates the algorithm according to the present disclosure.

When it is determined in step 1205 that the touch and hold time is greater than or equal to the reference time, the portable terminal recognizes that the touch on the display unit 110 is held during the reference time. Accordingly, the portable terminal proceeds to step 1207 and displays screen rotation locking event occurrence information. For example, when the touch on the display unit 110 is held during the reference time, the portable terminal displays terminal rotation direction for the screen locking event on the display unit 110 as illustrated in FIG. 13D.

After that, the portable terminal proceeds to step 1209 and determines if the terminal is rotated. For example, the portable terminal determines if the terminal is rotated as illustrated in FIG. 13E. In an embodiment, the portable terminal determines the rotation or non-rotation of the terminal irrespective of user's touch and hold or not.

When it is determined in step 1209 that the terminal is not rotated, the portable terminal recognizes that the screen locking event does not occur. Accordingly, the portable terminal terminates the algorithm according to the present disclosure.

Alternatively, when it is determined in step 1209 that the terminal is rotated, the portable terminal recognizes that the screen locking event occurs. Accordingly, the portable terminal proceeds to step 1211 and locks automatic screen rotation. At this point, the portable terminal may deactivate an automatic screen rotation service.

After that, the portable terminal proceeds to step 1213 and determines if shaking of the terminal is recognized. For example, the portable terminal determines if the shaking of the terminal is sensed through the sensing module 160.

When it is determined in step 1213 that the shaking of the terminal is sensed, the portable terminal recognizes that a screen unlocking event occurs. Accordingly, the portable terminal proceeds to step 1215 and releases the locked automatic screen rotation. If the automatic screen rotation service deactivated according to the screen locking event, the portable terminal may activate the automatic screen rotation service.

Alternatively, when it is determined in step 1213 that the shaking of the terminal is not sensed, the portable terminal proceeds to step 1217 and determines if the execution of the application executed in step 1201 is ended.

When it is determined in step 1201 that the execution of the application is not ended, the portable terminal proceeds to step 1213 and determines if the shaking of the terminal is sensed.

Alternatively, when it is determined in step 1217 that the execution of the application is ended, the portable terminal proceeds to step 1215 and releases the locked automatic screen rotation. If the automatic screen rotation service deactivated according to the screen locking event, the portable terminal may activate the automatic screen rotation service.

Next, the portable terminal terminates the algorithm according to the present disclosure.

The embodiments described above provide an advantage of reducing an inconvenience that a screen rotates while a user does not intend and easily locking automatic screen rotation, by locking the automatic screen rotation by a simple touch manipulation in a portable terminal with a touch screen.

According to certain embodiments of the present invention described above rotation of a terminal is sensed. This may comprise determining whether the rotation exceeds a predetermined threshold rotation angle.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the disclosure has been shown and described with reference to certain preferred embodiments thereof, it will be understood by those skilled in the art that various changes in form and details may be made therein without departing from the spirit and scope of the disclosure as defined by the appended claims.

## Claims

1. A method of controlling screen rotation in a portable terminal having an automatic screen rotation service, the method comprising:
if the automatic screen rotation service is activated:
sensing a touch input through a touch screen of the portable terminal; and
sensing rotation of the portable terminal;
wherein if rotation of the portable terminal is sensed while the touch input is maintained, the method further comprises locking or deactivating the automatic screen rotation service.

2. The method of claim 1, wherein if rotation of the portable terminal is sensed while the touch input is maintained the method further comprises:
identifying a touch and hold time; and
locking or deactivating the automatic screen rotation service only if the touch and hold time exceeds a reference time.

3. The method of claim 1, wherein if rotation of the portable terminal is sensed while the touch input is maintained the method further comprises:
identifying the rotation direction of the portable terminal; and
locking or deactivating the automatic screen rotation service only if the rotation direction of the portable terminal is in a reference direction.

4. The method of claim 1, further comprising:
if a touch input is sensed, identifying a touch and hold time;
determining if the touch and hold time exceeds a reference time;
if the touch and hold time exceeds the reference time, displaying a reference direction indicating a criterion for determining whether the automatic screen rotation service is deactivated; and
locking or deactivating the automatic screen rotation service only if the rotation direction of the portable terminal is in the reference direction.

5. The method of claim 1, further comprising:
deactivating the automatic screen rotation service only if a first application is executed before sensing the touch.

6. The method of claim 5, further comprising:
activating the automatic screen rotation service when the execution of the first application ends.

7. The method of claim 1, further comprising:
if the automatic screen rotation service is deactivated:
sensing a touch input through a touch screen of the portable terminal; and
sensing rotation of the portable terminal;
wherein if rotation of the portable terminal is sensed while the touch is maintained, the method further comprises unlocking the deactivated automatic screen rotation service or activating the automatic screen rotation service.

8. The method of claim 7, wherein if rotation of the portable terminal is sensed while the touch input is maintained the method further comprises:
identifying a touch and hold time; and
unlocking the deactivated automatic screen rotation service or activating the automatic screen rotation service only if the touch and hold time exceeds a reference time.

9. The method of claim 7, wherein if rotation of the portable terminal is sensed while the touch input is maintained the method further comprises:
identifying the rotation direction of the portable terminal; and
unlocking the deactivated automatic screen rotation service or activating the automatic screen rotation service only if the rotation direction of the portable terminal is in a reference direction.

10. The method of claim 7, further comprising:
if a touch input is sensed, identifying a touch and hold time;
determining if the touch and hold time exceeds a reference time;
if the touch and hold time exceeds the reference time, displaying a reference direction indicating a criterion for determining whether the automatic screen rotation service is activated; and
unlocking the deactivated automatic screen rotation service or activating the automatic screen rotation service only if the rotation direction of the portable terminal is in the reference direction.

11. A portable terminal comprising:
a controller arranged to implement an automatic screen rotation service;
a touch screen arranged to sense a touch input and to provide a touch input signal to the controller; and
a sensing module arranged to sense rotation of the portable terminal and to provide a rotation signal to the controller;
wherein if the automatic screen rotation service is activated the controller is arranged to determine if a touch input signal is received, to determine if a rotation signal is received while the touch input signal is maintained, and if so to lock or deactivate the automatic screen rotation service.

12. The portable terminal of claim 11, wherein if the rotation signal is received while the touch input signal is maintained the controller is further arranged to:
identify a touch and hold time; and
lock or deactivate the automatic screen rotation service only if the touch and hold time exceeds a reference time.

13. The portable terminal of claim 11, wherein if the rotation signal is received while the touch input signal is maintained the controller is further arranged to:
identify the rotation direction of the portable terminal; and
lock or deactivate the automatic screen rotation service only if the rotation direction of the portable terminal is in a reference direction.

14. The portable terminal of claim 11, wherein the controller is further arranged to deactivate the automatic screen rotation service only if a first application is executed before sensing the touch.

15. The portable terminal of claim 11, wherein if the automatic screen rotation service is deactivated the controller is arranged to determine if a touch input signal is received, to determine if a rotation signal is received while the touch input signal is maintained, and if so to unlock the deactivated automatic screen rotation service or activate the automatic screen rotation service.
